# EUROPÄISCHE PATENTSCHRIFT

(11) **EP 0 770 469 B1**
(45) Veröffentlichungstag und Bekanntmachung des Hinweises auf die Patenterteilung: **10.01.2001**
(21) Anmeldenummer: 96110272.0
(22) Anmeldetag: 26.06.1996
(51) Int. Cl.: B29C 47/28, B29C 47/70, B29C 49/04, B29C 47/06

(54) **Extrusionskopf zur Herstellung von schlauch- oder rohrförmigen Vorformlingen aus extrudierbarem Kunststoff**
Extrusion head for the manufacture of tube shaped preforms made from an extrudable polymer
Tête d'extrusion pour la fabrication de préformes tubulaires, fabriquées à partir de matière plastique extrudable

(30) Priorität: 26.09.1995 DE 19535749
(43) Veröffentlichungstag der Anmeldung: 02.05.1997
(73) Patentinhaber: W. Müller GmbH, 53842 Troisdorf (DE)
(72) Erfinder: Grütjen, Lothar, 53797 Lohmar (DE)
(74) Vertreter: Harwardt, Günther, Dipl.-Ing.

(56) Entgegenhaltungen:
- DE-A- 2 712 910
- DE-A- 2 712 970
- FR-A- 1 084 310
- GB-A- 758 367
- US-A- 3 365 750

## Beschreibung

Die Erfindung betrifft einen Extrusionskopf zur Herstellung von schlauch- oder rohrförmigen Vorformlingen aus extrudierbarem Kunststoff, die aus mindestens einer Schicht aufgebaut sind und zur Formung von Hohlkörpern bestimmt sind, mit je Schicht einem Verteiler, der eine zentrale Bohrung besitzt und welcher einen ringförmigen Austrittsspalt zu einem Ringspalt aufweist, der zwischen der Außenfläche einer Pinole und der Bohrung des Verteilers gebildet ist, wobei der Austrittsspalt mit einem Fließkanal kommuniziert, der von einem Zuführkanal gespeist wird, welcher einen Anschlußkanal zur Verbindung mit einem Extruder aufweist, und wobei die Pinole und die Bohrung des Verteilers eine gemeinsame Längsachse aufweisen.

Ein solcher Extrusionskopf ist in der WO 93/10956 beschrieben. Dabei ist jeder Verteiler aus zwei Teilen aufgebaut, die jeweils einen Flanschabschnitt und einen kegeligen Hülsenabschnitt umfassen. Die beiden Teile sind ineinandergesteckt, so daß die beiden Flanschabschnitte mit rechtwinklig zur Längsachse verlaufenden Anlageflächen aneinanderliegen. Von der Peripherie der beiden Flanschabschnitte geht ein Anschlußkanal aus, der in einen in zwei Arme aufgeteilten Zuführkanal mündet. Die beiden Arme des Zuführkanals sind in den aneinanderliegenden Flächen der Flanschabschnitte ausgebildet. Sie münden in je einen Fließkanal, welche schraubenlinienförmig in der Außenfläche des Hülsenabschnittes des inneren der beiden Teile des Verteilers eingearbeitet sind und ähnlich einer zweigängigen Schraube verlaufen. Die Fließkanäle sind zur Wandung der Bohrung des Hülsenabschnittes des äußeren Teiles des Verteilers offen. Mehrere in Achsrichtung der Längsachse aufeinander folgende Verteiler der vorgenannten Bauart sind ineinander geschachtelt, so daß sich deren Höhenabschnitte jeweils zumindest bis in die Bohrung der Flanschabschnitte des darunter angeordneten Verteilers erstrekken.

Ferner ist ein Extrusionskopf bekannt, bei dem die Verteiler in Form von Hülsen ausgeführt, die ineinander geschachtelt sind. Ein solcher Extrusionskopf ist für die Herstellung von Vorformlingen, die eine Mehrzahl von Schichten, beispielsweise bis zu sechs Schichten im Aufbau aufweisen, kompliziert und darüber hinaus vergrössert sich der radiale Bauraum erheblich. Hierdurch wird die Verwendung beschränkt, weil bei Anlagen, die mehrere solcher Extrusionsköpfe nebeneinander aufweisen, beispielsweise bis zu zwölf bei Mehrstationenanlagen, räumliche Beschränkungen gegeben sind. Der Durchmesser des Extrusionskopfes beeinflußt das Stichmaß in erheblichem Maße, so daß dies auch die Anzahl auf der Anlage zu fertigenden Produkte beeinflußt. Darüber hinaus ist für jeden Anwendungsfall eine Neukonstruktion des Extrusionskopfes erforderlich, wenn beispielsweise auf der Anlage Vorformlinge mit mehr oder weniger Schichten als die, für die der Extrusionskopf ausgelegt ist, gefahren werden sollen.

Darüber hinaus beeinflußt die Ineinanderschachtelung die Länge der Fließwege. Es sollen einerseits möglichst kurze Fließwege gewährleistet sein, um die Schmelze nicht negativ zu beeinflussen, andererseits müssen die Fließwege aber so gewählt sein, daß eine homogene Struktur erhalten bleibt.

Ein weiterer Nachteil der bekannten Ausbildung ist darin begründet, daß der Durchsatzbereich eines solchen Extrusionskopfes hinsichtlich der Leistung in Kg/Stunde begrenzt ist. Dies bedeutet, daß er nur in engen Bereichen hinsichtlich der erzielbaren Qualität eine optimale Funktion gewährleistet. Dies resultiert daher, daß die für die Führung des Werkstoffes in Form von Herzkurven vorgesehenen Kanäle nur in engen Grenzen eine optimale Funktion gewährleisten. Ein weiterer Nachteil besteht in der relativ großen Baulänge des Extrusionskopfes, so daß ein Einsatz von Extrusionsköpfen für Rundläufer zur Herstellung von Hohlkörpern mit einem Mehrschichtenaufbau enge Grenzen gesetzt sind bzw. nicht in Frage kommen.

Der Erfindung liegt die Aufgabe zugrunde, einen Extrusionskopf zu schaffen, der einen relativ großen Durchsatzbereich für das zu verarbeitende Material aufweist und dabei Vorformlinge erzeugen läßt, die eine gleichmäßige Qualität über den Umfang aufweisen. Ferner soll der Extrusionskopf einen einfachen Aufbau haben und eine einfache Anpassung an unterschiedliche Bedürfnisse hinsichtlich der Anzahl vorzusehender Schichten zulassen.

Diese Aufgabe wird erfindungsgemäß dadurch gelöst, daß der Verteiler aus vier Verteilerscheiben aufgebaut ist, die mit Anlageflächen aneinander liegen, die Ebenen darstellen, auf denen die Längsachse senkrecht steht, wobei der Zuführkanal in mindestens einer der aneinderliegenden Anlageflächen der beiden mittleren Verteilerscheiben angeordnet ist und der Zuführkanal mit Durchlässen ausgestattet ist, daß der Fließkanal in zwei Teilkanäle geteilt ist, von denen je einer in zumindest einer der aneinander liegenden Anlageflächen einer mittleren Verteilerscheibe und den einer äußeren Verteilerscheibe angeordnet ist und die beiden äußeren Verteilerscheiben zentrale Ansätze aufweisen, die in die zentralen Bohrungen der beiden mittleren Verteilerscheiben vorstehen und aufeinander zu geführt sind und zwischen ihren einander zugewandten Enden den ringförmigen Austrittsspalt zum Ringspalt bilden und daß sich die Teilkanäle in den zwischen den Ansätzen und den zentralen Bohrungen der mittleren Verteilerscheiben gebildeten Freiraum bis zu dem Austrittsspalt fortsetzen.

Von Vorteil bei dem damit vorgeschlagenen Aufbau ist, daß für jede Schicht eine Verteilereinheit geschaffen wird, die separat eine Baueinheit bildet und bei der keine Ineinanderschachtelung der Bauteile hinsichtlich des Schichtenaufbaus gegeben ist. Es ist eine schnelle Anpaßbarkeit des Extrusionskopfes an verschiedene Aufgaben möglich. Die Maschine kann durch Hinzufügen oder Weglassen von einzelnen Verteilern angepaßt werden, um die nötige Schichtenanzahl zu erreichen. Die Verteiler sind entlang der Längsachse übereinander angeordnet. Es wird dadurch ein konstanter Durchmesser unabhängig von der Anzahl der zu erzeugenden Schichten erzielt. Somit kann das Stichmaß bei einer Anlage mit mehreren Extrusionsköpfen erheblich verringert werden. Schließlich wird auch eine Verkürzung der Bauweise erzielt, so daß auch ein Einsatz bei Rundläufermaschinen in Frage kommt. Ferner wird aufgrund der Anordnung und Führung der Kanäle, insbesondere aufgrund der Teilung, eine verbesserte Qualität erzielt, denn die Materialführung in den Kanälen ermöglicht einen Ausgleich von Variationen im Aufbau und in der Dickenausbildung der Wandschichten bei variierendem Materialfluß.

Schließlich werden die Fließwege durch die Anordnung in radialen Ebenen relativ kurz gestaltet. Trotzdem wird eine gute Vergleichmäßigung der Schmelze erzielt, welche insbesondere durch die Teilung der Ströme erreicht wird. Insgesamt wird eine kompakte Bauweise erzielt. In dem Vorformling wird aufgrund der verbesserten Fließwege eine deutlich verringerte Spannung erzielt. Die auch gleichmäßigere Spannungsverteilung führt zu einem positiven Einfluß bei der Herstellung der Hohlkörper durch das nachfolgende Blasen.

Schließlich verringert sich auch damit das Gewicht des Extrusionskopfes und der relativ geringe Platzbedarf bedeutet, daß auch die Nachrüstung bei existenten Maschinen einfacher wird.

In Ausgestaltung der Erfindung ist vorgesehen, daß die Durchlässe zu den beiden Teilkanälen zueinander versetzt sind. Hierdurch wird eine verbesserte Überlappung der Teilströme erzielt, so daß die Vergleichmäßigung der Spannungsverteilung noch begünstigt wird. Vorzugsweise ist vorgesehen, daß die Durchlässe um die Längsachse um 180° zueinander versetzt sind und der Zuführkanal als in der Ansicht auf die Anlagefläche als halbkreisförmige Ringnut gestaltet ist, wobei der Anschlußkanal mittig zwischen dessen Enden, an denen sich die Durchlässe befinden, angeordnet ist.

Eine günstige Ausnutzung des zur Verfügung stehenden Bauraumes wird dadurch erzielt, daß der Zuführkanal in beiden aneinanderliegenden Anlageflächen der mittleren Verteilerscheiben eingearbeitet ist und die eine der mittleren Verteilerscheiben den Duchlaß zur ersten und die weitere mittlere Verteilerscheibe den Durchlaß zu der zweiten äußeren Verteilerscheibe aufweist.

Dies gilt auch für die Teilkanäle. Eine günstige Beeinflussung des Fließverhaltens und der Verteilung wird ferner dadurch erzielt, daß der in der jeweilig mittleren Verteilerscheibe angeordnete Teilkanalabschnitt diametral zum Durchlaß eine Querschnittsverjüngung aufweist und die zugehörige äußere Verteilerscheibe in ihrem Teilkanalabschnitt mit einem zum Durchlaß der mittleren Verteilerscheibe korrespondierenden Verteilersteg und mit einer zur Querschnittsverjüngung der mittleren Verteilerscheibe korrespondierenden Verjüngung versehen ist. Zur Erzielung der erforderlichen Längen, und zwar möglichst gleicher Fließlängen hinsichtlich der beiden Teilkanäle zu dem Austrittsspalt hin, ist vorgesehen, daß die mittleren Verteilerscheiben über ihre Anlageflächen, die zur Anlage an der zugehörigen Anlagefläche der äußeren Verteilerscheiben bestimmt sind, axial vorstehende Ringvorsprünge aufweisen, in die sich eine zentrale Bohrung hinein erstreckt. Um die richtige Führung in Richtung auf die Pinole bzw. den zwischen dieser und der Bohrung des Verteilers gebildeten Ringspalt und Orientierung des Austrittsspaltes in Extrusionsrichtung zu erzielen, ist vorgesehen, daß die zentrale Bohrung jeder der mittleren Verteilerscheiben jeweils zu ihrer Anlagefläche hin, mit der sie an der Anlagefläche der anderen mittleren Verteilerscheibe anliegt, im Querschnitt verjüngt ist.

Vorzugsweise sind die Verteilerscheiben durch Verbindungsmittel lösbar miteinander zu einer Einheit verbunden. Dies kann beispielsweise durch Schrauben geschehen.

Der modulare Aufbau kann auch dadurch begünstigt werden, daß jeweils mehrere Verteiler in einem Gehäuse zu Grundeinheiten zusammengefaßt werden. So können beispielsweise drei Verteiler in einem solchen Gehäuse aufgenommen sein und mit drei Extrudern versehen sein. Wenn ein Extrusionskopf Vorformlinge mit sechs Schichten erzeugen soll, kann dieser somit aus zwei solcher Grundeinheiten bestehen, die zu einer Baueinheit zusammengefaßt sind. Dabei kann für eine der Baueinheiten vorgesehen sein, daß einer deren Verteiler zum Anschluß an den Maschinenextruder gedacht ist, während die anderen Verteiler von Zusatzextrudern bedient werden.

Ein bevorzugtes Ausführungsbeispiel der Erfindung ist in der Zeichnung schematisch dargestellt.

Es zeigt
- Figur 1: einen Schnitt durch einen Extrusionskopf für Vorformlinge mit einem Wandungsaufbau aus sechs Schichten, mit Zuordnung der Zusatzextruder,
- Figur 2: eine Draufsicht zu Figur 1,
- Figur 3: einen Schnitt durch eine Verteilereinheit gemäß Figur 1, und zwar hinsichtlich der Verteilereinheit, die vom Maschinenextruder bedient wird, und zwar nach der Schnittlinie III-III von Figur 4,
- Figur 4: eine Ansicht, teilweise geschnitten gemäß Schnittverlauf IV-IV gemäß Figur 3,
- Figur 5: eine Explosionsdarstellung des Verteilers gemäß Figur 3,
- Figur 6: eine der beiden äußeren, nämlich die obere Verteilerplatte des Verteilers gemäß Figur 3,
- Figur 7: die der oberen Verteilerplatte zugehörige mittlere Verteilerplatte und
- Figur 8: die weitere äußere Verteilerplatte, nämlich die untere Verteilerplatte im Schnitt.

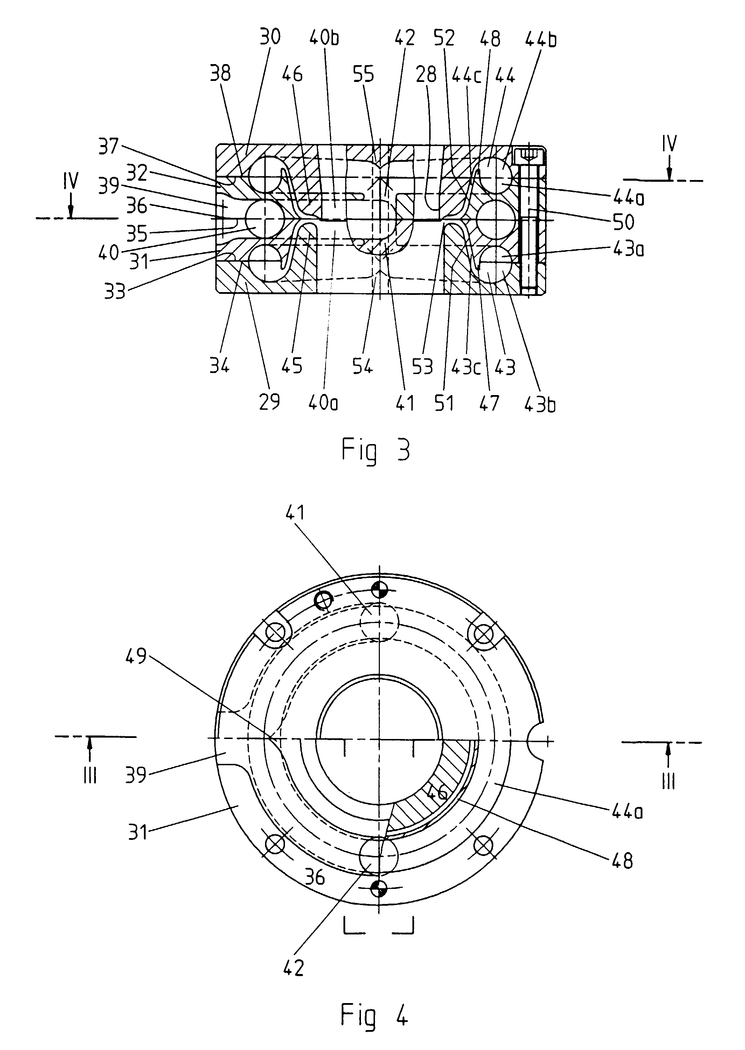

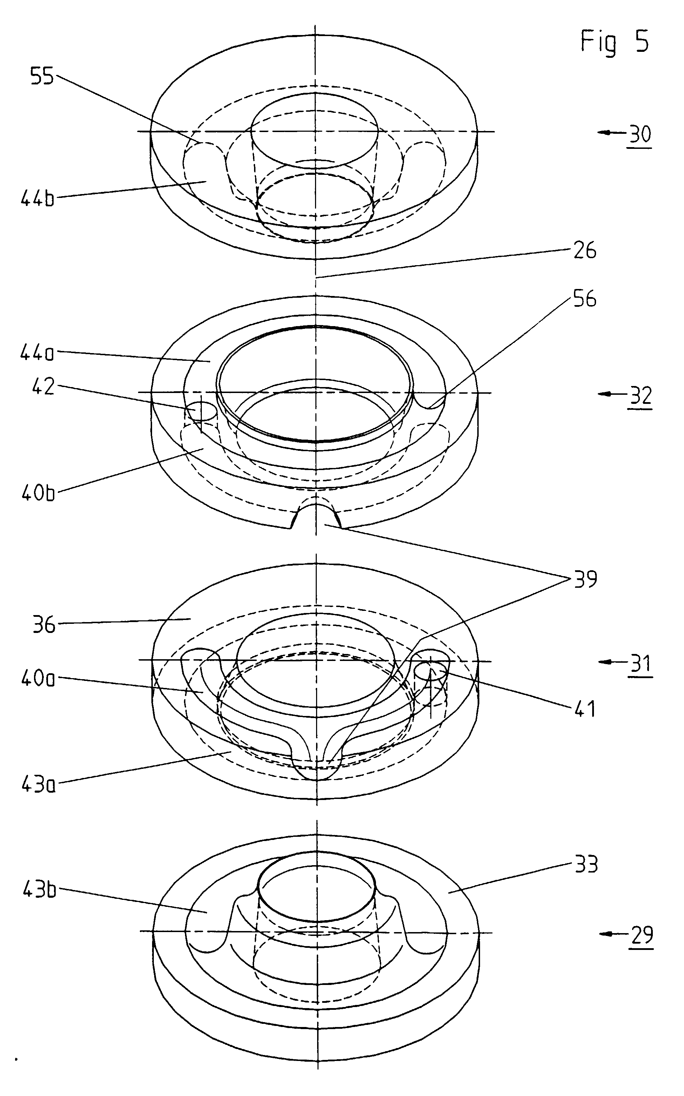

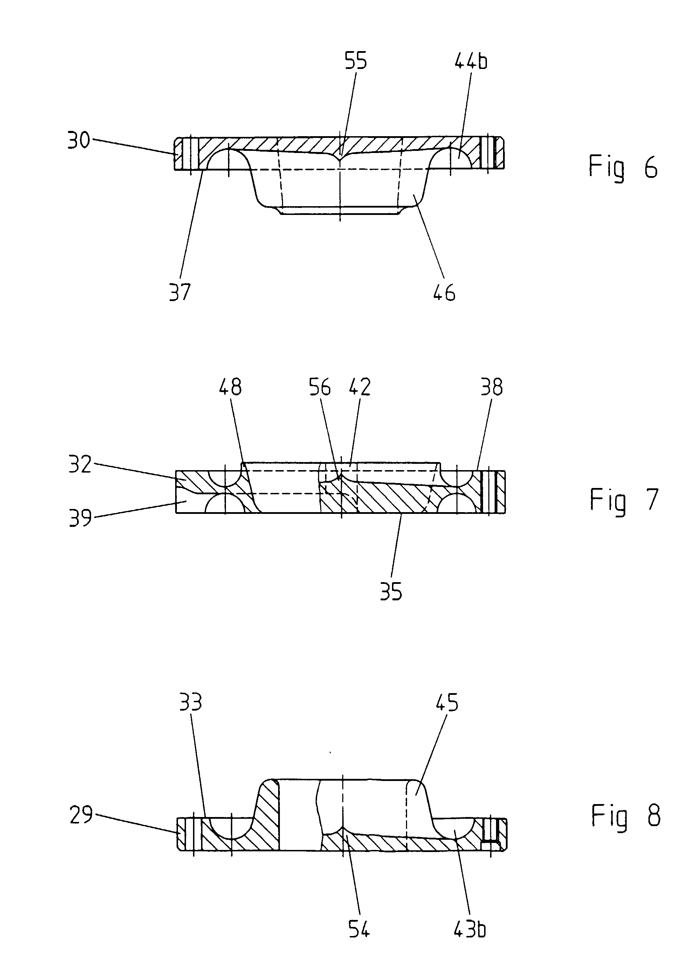

Die Darstellung der Figur 5 wurde so gewählt, daß die Verteilerplatten um 90° gegen den Uhrzeigersinn gedreht sind. Die Schnittdarstellungen der Figuren 6 bis 8 entsprechen der Schnittebene gemäß Figur 3.

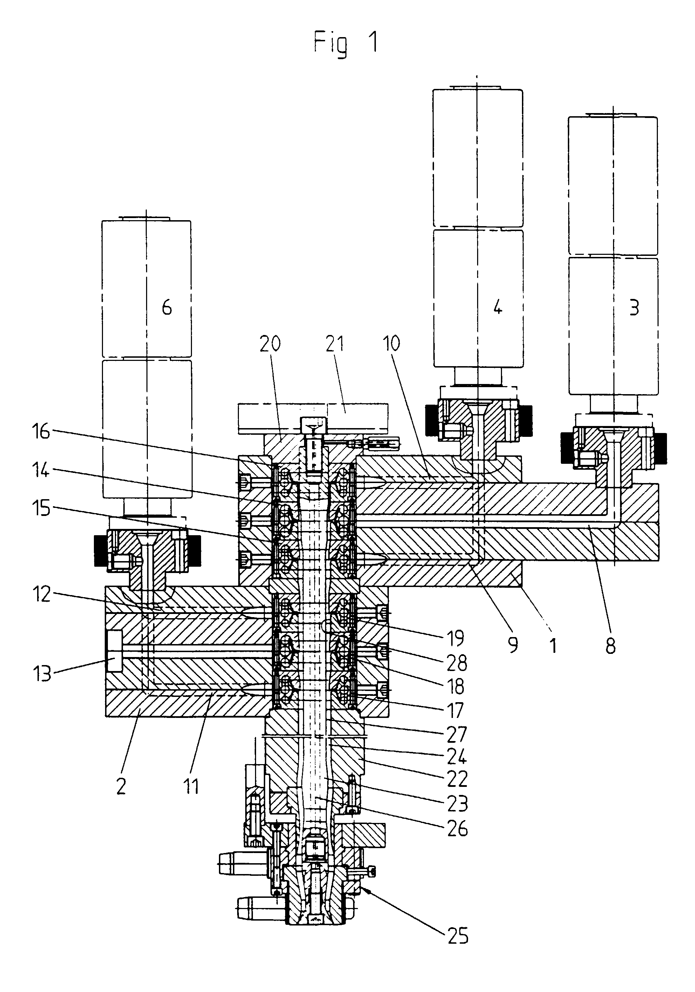

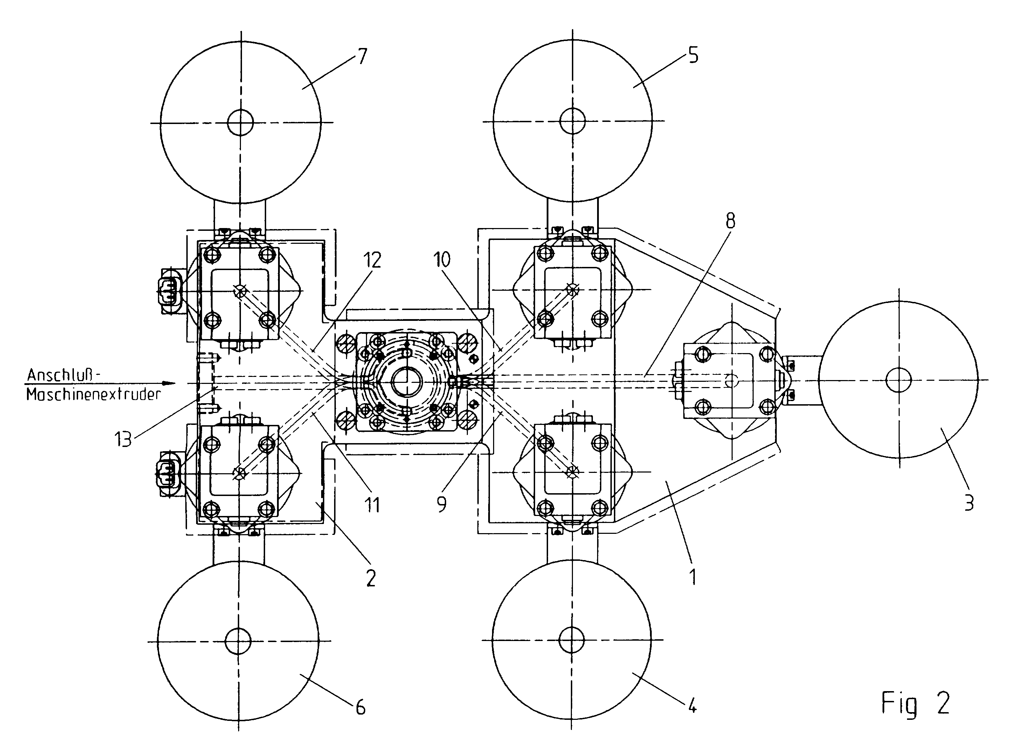

Der Extrusionskopf gemäß Figuren 1 und 2 umfaßt zwei Gehäuse 1, 2, wobei dem Gehäuse 1 die Zusatzextruder 3, 4, 5 und dem Gehäuse 2 die Zusatzextruder 6 und 7 sowie ein Maschinenextruder, der nicht dargestellt ist, zugeordnet sind. Der Maschinenextruder und die Zusatzextruder sind dazu gedacht, einer oder mehrere nebeneinanderliegende Extrusionsköpfe zu versorgen.

Im Gehäuse 1, das plattenförmig aufgebaut ist, sind Verteiler 14, 15, 16 aufgenommen. Diese sind jeweils mit dem zugehörigen Extruder durch einen Anschlußkanal 8, 9, 10 verbunden. Die dem Gehäuse 2 zugeordneten Zusatzextruder 6, 7 sind mit dessen Anschlußkanälen 11, 12 und der Maschinenextruder mit dem Anschlußkanal 13 verbunden. Im Gehäuse 2 sind die Verteiler 17, 18, 19 angeordnet. Nach oben sind die Gehäuse 1, 2 durch einen Deckel 20 abgeschlossen, an dem sich eine Tragplatte 21 für die Befestigung eines Verstellaggregates für die Wanddickenregelung angebracht ist, die mit der Formeinheit 25 für die Formung der endgültigen Abmaße des Vorformlinges in Verbindung steht. Die beiden Gehäuse 1, 2 sind durch eine Zentrierplatte miteinander verbunden. Unten zur Formeinheit 25 hin schließt sich an das Gehäuse 2 eine Abstandshülse 22 an. Die Verteiler 14 bis 19 weisen eine Bohrung 28 auf, die profiliert ist und durch die sich die Pinole 23 erstreckt. Die Pinole 23 hat ebenfalls eine profilierte Außenfläche 27. Zwischen dieser Außenfläche 27 und der Bohrung 28 ist ein Ringspalt 24 gebildet, der zur Formeinheit 25 hin im Querschnitt entsprechend dem Schichtenaufbau zunimmt. Die Pinole 23 und die Verteiler 14 bis 19 sind auf einer gemeinsamen Längsachse 26 zentriert.

Nachfolgend sind der Aufbau und die Einzelteile eines Verteilers anhand des Verteilers 18 näher beschrieben. Die einzelnen Verteiler sind im wesentlichen hinsichtlich der für die Funktion wichtigen Teile gleich aufgebaut, mit Ausnahme der Bohrung 28 unterschiedlich in Hinsicht auf die Dicke der von ihnen zu erzeugenden Schichten.

Der Verteiler 18 besteht aus vier Verteilerscheiben, nämlich der unteren äußeren Verteilerscheibe 29, der äußeren oberen Verteilerscheibe 30 und den beiden dazwischen angeordneten mittleren Verteilerscheiben 31, 32. Die Verteilerscheiben 29 bis 32 liegen mit Anlageflächen aneinander. Sie sind durch Schrauben 50 miteinander verbunden und bilden eine Baueinheit. So liegt die untere äußere Verteilerscheibe 29 mit einer Anlagefläche 33 an der Anlagefläche 34 der unteren mittleren Verteilerscheibe 31 an. Die untere mittlere Verteilerscheibe 31 besitzt eine Anlagefläche 36, gegen die die obere mittlere Verteilerscheibe 32 mit der Anlagefläche 35 anliegt. Die davon abgewandte Anlagefläche 38 der oberen mittleren Verteilerscheibe 32 dient zur Anlage der Anlagefläche 37 der oberen äußeren Verteilerscheibe 30. Alle Anlageflächen 33 bis 38 sind in Ebenen angeordnet, auf welchen die Längsachse 26 senkrecht steht. Die beiden mittleren Verteilerscheiben 31, 32 weisen einen in beide Anlageflächen 35, 36 eingearbeiteten und sich ergänzenden Anschlußkanal 39 auf, der zur Verbindung mit dem Anschluß 13 gemäß Figur 1 für den Maschinenextruder dient. Das von diesem ausgestoßene Kunststoffmaterial gelangt über den Anschlußkanal 39 in einen Zuführkanal 40, der aus zwei im Halbkreis geführten Nuten besteht, von denen der Zuführkanalabschnitt 40a in der Anlagefläche 36 der Verteilerscheibe 31 und der Kanal 40b in der Anlagefläche 35 der Verteilerscheibe 32 angeordnet ist. Der Zuführkanalabschnitt 40a verfügt an seinem Ende über einen Durchlaß 41 zu einem Teilkanal 43, von dem der Teilkanalabschnitt 43a in der Anlagefläche 34 der mittleren Verteilerscheibe 31 und der Teilkanalabschnitt 43b in der Anlagefläche 33 der äußeren, unteren Verteilerscheibe 29 angeordnet ist. Die Teilkanalabschnitte 43a und 43b sind als Ringnuten in den jeweiligen Anlageflächen 33, 34 gestaltet. Die äußere, untere Verteilerscheibe 29 weist einen Ansatz 45 auf, der in Richtung auf die Ebene, an der die beiden Anlageflächen 35, 36 der beiden mittleren Verteilerscheiben 31, 32 aneinander anliegen, vorsteht und auf seiner Außenfläche als Konus gestaltet ist und einen Teilkanal 43c zur Bohrung 51 in der unteren mittleren Verteilerscheibe 31 bzw. einem von dieser nach unten vorstehenden Ringvorsprung 47 bildet.

Um 180° zum Durchlaß 41 versetzt ist in der oberen mittleren Verteilerscheibe 32 ein Durchlaß 42 angeordnet, der den Zuführkanal 40 mit der oberen mittleren Verteilerscheibe 32 und oberen äußeren Verteilerscheibe 30 zugehörigen Teilkanal 44 mit dem Zuführkanal 40 verbindet. Der Teilkanal 44 weist ebenfalls Teilkanalabschnitte 44a, 44b und 44c auf, von denen der Teilkanalabschnitt 44a als Ringkanal gestaltet ist und in die Anlagefläche 38 der oberen mittleren Verteilerscheibe 32 eingearbeitet ist. Der Teilkanalabschnitt 44b ist in der gegenüberliegenden Anlagefläche 37 der oberen äußeren Verteilerscheibe 30 angeordnet. Der Teilkanalabschnitt 44c ist zwischen der Bohrung 52 in der oberen mittleren Verteilerscheibe 32 sowie einem von deren Anlagefläche 38 nach oben vorstehenden Ringvorsprung 48 und der Außenfläche eines Ansatzes 46 der oberen äußeren Verteilerscheibe 30 ausgebildet. Er endet etwa in der Höhe der beiden aneinanderliegenden Anlageflächen 35, 36 der beiden mittleren Verteilerscheiben 31, 32 zur Bildung eines ringförmigen Austrittsspaltes 53. Insbesondere aus Figur 4 ist ersichtlich, daß der Anschlußkanal 39 mit einem Strömungsteiler 49 versehen, der dafür sorgt, daß das vom Extruder geförderte Material in die beiden Arme des Zuführkanales 40 aufgeteilt wird, so daß diese über die Durchlässe 41, 42 zu den Teilkanälen 43, 44 gelangen können. Durch die Führung der Teilkanäle 43, 44 und deren Anschlüsse zum Zuführkanal 40 erfolgt eine Vergleichmäßigung des Materiales, indem Materialabweichungen durch Überlappung der Teilströme ausgeglichen werden. Um darüber hinaus einen günstigen Fluß zur Vermeidung von Toträumen zu erzielen, sind ferner Verteilerstege 54, 55, 56 vorhanden. Von diesen liegt der Verteilersteg 54 dem Durchlaß 41 gegenüber und dient zur Aufteilung des Stromes zu beiden Richtungen des Teilkanales 43. Diametral dazu sind zwei Verteilerstege 55, 56 angeordnet, die dafür sorgen, daß das Material umgelenkt wird, und zwar in Fließrichtung zum Austrittsspalt 53 hin, so daß sich keine sichtbaren Nahtstellen oder Unregelmäßigkeiten ergeben. Durch die radiale Anordnung der Fließkanäle in Ebenen, auf welchen die Längsachse senkrecht steht, werden Verteiler erzielt, die eine relativ kurze axiale Bauweise in bezug auf die Längsachse 26 aufweisen. Außerdem wird aufgrund der Teilung der Masseströme und Fließkanäle ein guter Materialfluß erzielt, so daß sich hinsichtlich des Aufbaus der Schichten eine Gleichmäßigkeit ergibt. Schließlich erlaubt diese Ausbildung einen modularen Aufbau und eine relativ kurze axiale Bauweise eines Extrusionskopfes zur Erzeugung von Vorformlingen im Mehrschichtenaufbau. Diese kurze Bauweise erlaubt insbesondere auch einen Einsatz bei Rundläufern oder auch eine Nachrüstung bei existenten Maschinen, ohne daß das Stichmaß zwischen zwei Extrusionsköpfen negativ beeinflußt wird. Die radialen Abmaße sind nämlich äußerst gering im Verhältnis zu einer ineinandergeschachtelten Bauweise, wie sie üblicherweise bei Verteilern in Form von ineinandergesteckten Hülsen vorgesehen ist.

### Bezugszeichenliste

- 1, 2: Gehäuse
- 3 bis 7: Zusatzextruder
- 8 bis 13: Anschlüsse
- 14 bis 19: Verteiler
- 20: Deckel
- 21: Tragplatte
- 22: Abstandshülse
- 23: Pinole
- 24: Ringspalt
- 25: Formeinheit
- 26: Längsachse
- 27: Außenfläche der Pinole
- 28: Bohrung der Verteiler
- 29: untere äußere Verteilerscheibe
- 30: obere äußere Verteilerscheibe
- 31: untere mittlere Verteilerscheibe
- 32: obere mittlere Verteilerscheibe
- 33 bis 38: Anlagefläche
- 39: Anschlußkanal
- 40: Zuführkanal
- 40a, 40b: Zuführkanalabschnitte
- 41, 42: Durchlaß
- 43: Teilkanal
- 43a, 43b, 43c: Teilkanalabschnitte
- 44: Teilkanal
- 44a, 44b, 44c: Teilkanalabschnitte
- 45, 46: Ansätze
- 47, 48: Ringvorsprung
- 49: Strömungsteiler
- 50: Schrauben
- 51, 52: Bohrung
- 53: Austrittsspalt
- 54, 55, 56: Verteilersteg

## Patentansprüche

1. Extrusionskopf zur Herstellung von schlauch- oder rohrförmigen Vorformlingen aus extrudierbarem Kunststoff, die aus mindestens einer Schicht aufgebaut sind und zur Formung von Hohlkörpern bestimmt sind, mit je Schicht einem Verteiler (14 bis 19), der eine zentrale Bohrung (28) besitzt und welcher einen ringförmigen Austrittsspalt (53) zu einem Ringspalt (24) aufweist, der zwischen der Außenfläche (27) einer Pinole (23) und der Bohrung (28) des Verteilers (14 bis 19) gebildet ist, wobei der Austrittsspalt (53) mit einem Fließkanal kommuniziert, der von einem Zuführkanal (40) gespeist wird, welcher einen Anschlußkanal (39) zur Verbindung mit einem Extruder (3 bis 7) aufweist, und wobei die Pinole (23) und die Bohrung des Verteilers (14 bis 19) eine gemeinsame Längsachse (26) aufweisen,
dadurch gekennzeichnet,
daß der Verteiler (14 bis 19) aus vier Verteilerscheiben (29 bis 32) aufgebaut ist, die mit Anlageflächen (33 bis 38) aneinander liegen, die Ebenen darstellen, auf denen die Längsachse (26) senkrecht steht, wobei der Zuführkanal (40) in mindestens einer der aneinanderliegenden Anlageflächen (35, 36) der beiden mittleren Verteilerscheiben (31, 32) angeordnet ist und der Zuführkanal mit Durchlässen (41,42) ausgestattet ist, daß der Fließkanal in zwei Teilkanäle (43, 44) geteilt ist, von denen je einer in zumindest einer der aneinander liegenden Anlageflächen (34, 38) einer mittleren Verteilerscheibe (31, 32) und den (33, 37) einer äußeren Verteilerscheibe (29, 30) angeordnet ist und die beiden äußeren Verteilerscheiben (29, 30) zentrale Ansätze (45, 46) aufweisen, die in die zentralen Bohrungen (51, 52) der beiden mittleren Verteilerscheiben (31, 32) vorstehen und aufeinander zu geführt sind und zwischen ihren einander zugewandten Enden den ringförmigen Austrittsspalt (53) zum Ringspalt (24) bilden und daß sich die Teilkanäle (43c, 44c) in den zwischen den Ansätzen (45, 46) und den zentralen Bohrungen (51, 52) der mittleren Verteilerscheiben (31, 32) gebildeten Freiraum bis zu dein Austrittsspalt (53) fortsetzen.

2. Extrusionskopf nach Anspruch 1,
dadurch gekennzeichnet,
daß die Durchlässe (41, 42) zu den beiden Teilkanälen (43, 44) zueinander versetzt sind.

3. Extrusionskopf nach Anspruch 2,
dadurch gekennzeichnet,
daß die Durchlässe (41, 42) um die Längsachse (26) um 180° zueinander versetzt sind und der Zuführkanal (40) als in der Ansicht auf die Anlagefläche als halbkreisförmige Ringnut gestaltet ist, wobei der Anschlußkanal (39) mittig zwischen dessen Enden, an denen sich die Durchlässe (41, 42) befinden, angeordnet ist.

4. Extrusionskopf nach einem der Ansprüche 1 bis 3,
dadurch gekennzeichnet,
daß der Zuführkanal (40) in beiden aneinanderliegenden Anlageflächen (35, 36) der mittleren Verteilerscheiben (31, 32) eingearbeitet ist und die eine (31) der mittleren Verteilerscheiben (31, 32) den Duchlaß (41) zur ersten (29) und die weitere mittlere Verteilerscheibe (32) den Durchlaß (42) zu der zweiten äußeren Verteilerscheibe (30) aufweist.

5. Extrusionskopf nach einem der Ansprüche 1 bis 4,
dadurch gekennzeichnet,
daß die Teilkanäle (43, 44) jeweils in beiden aneinanderliegenden Anlageflächen (34, 33; 38, 37) der mittleren Verteilerscheiben (31, 32) und äußeren Verteilerscheiben (29, 30) eingearbeitet sind und jeweils einen geschlossenen Ring bilden.

6. Extrusionskopf nach Anspruch 5,
dadurch gekennzeichnet,
daß der in der jeweilig mittleren Verteilerscheibe (31, 32) angeordnete Teilkanalabschnitt (43a, 44a) diametral zum Durchlaß (41, 42) eine Querschnittsverjüngung aufweist und die zugehörige äußere Verteilerscheibe (29, 30) in ihrem Teilkanalabschnitt (43b, 44b) mit einem zum Durchlaß (41, 42) der mittleren Verteilerscheibe (31, 32) korrespondierenden Verteilersteg (54) und mit einer zur Querschnittsverjüngung der mittleren Verteilerscheibe (31, 30) korrespondierenden Verjüngung versehen ist.

7. Extrusionskopf nach einem der Ansprüche 1 bis 6,
dadurch gekennzeichnet,
daß die mittleren Verteilerscheiben (31, 32) über ihre Anlageflächen (34, 38), die zur Anlage an der zugehörigen Anlagefläche (33, 37) der äußeren Verteilerscheiben (29, 30) bestimmt sind, axial vorstehende Ringvorsprünge (47, 48) aufweisen, in die sich eine zentrale Bohrung (51, 52) hinein erstreckt.

8. Extrusionskopf nach einem der Ansprüche 1 bis 7,
dadurch gekennzeichnet,
daß die zentrale Bohrung (51, 52) jeder der mittleren Verteilerscheiben (31, 32) jeweils zu ihrer Anlagefläche (35, 36) hin, mit der sie an der Anlagefläche (36, 35) der anderen mittleren Verteilerscheibe (31, 32) anliegen, im Querschnitt verjüngt ist.

9. Extrusionskopf nach einem der Ansprüche 1 bis 8,
dadurch gekennzeichnet,
daß die Verteilerscheiben (29 bis 32) durch Verbindungsmittel lösbar miteinander zu einer Einheit verbunden sind.

10. Extrusionskopf nach Anspruch 9,
dadurch gekennzeichnet,
daß die Verbindungsmittel durch Schrauben (50) dargestellt sind.

11. Extrusionskopf nach einem der Ansprüche 1 bis 10,
gekennzeichnet durch
eine Zusammenfassung von mehreren Verteilern (14 bis 16; 17 bis 19 in einem Gehäuse (1, 2).

12. Extrusionskopf nach Anspruch 11,
dadurch gekennzeichnet,
daß mehrere Gehäuse (1, 2) zur Bildung einer Baueinheit zusammengefaßt sind.

## Claims

1. An extrusion head for producing hose- or tube-shaped preforms from extrudable plastics, which preforms are composed of at least one layer and are intended for forming hollow members, per layer having one distributor (14 to 19) which comprises a central bore (28) and a ring-shaped exit gap (53) extending towards an annular gap (24) formed between the outer face (27) of a pinola (23) and the bore (28) of the distributor (14 to 19), wherein the exit gap (53) communicates with a flow channel which is fed by a supply channel (40) which comprises a connecting channel (39) to be connected to an extruder (3 to 7) and wherein the pinola (23) and the bore of the distributor (14 to 19) comprise a common longitudinal axis (26),
characterised in
that the distributor (14 to 19) is built up of four distributor discs (29 to 32) resting on one another by means of contact faces (33 to 38) which represent planes on which the longitudinal axis (26) is positioned perpendicularly, with the supply channel (40) being arranged in at least one of the abutting contact faces (35, 36) of the two central distributor discs (31, 32) and with the supply channel being provided with passages (41, 42), that the flow channel is divided into two partial channels (43, 44) of which one each is arranged in at least one of the abutting contact faces (34, 38) of a central distributor disc (31, 32) and in one of the contact faces (33, 37) of an outer distributor disc (29, 30) and that the two outer distributor discs (29, 30) comprise central projections (45, 46) which project into the central bores (51, 52) of the two central distributor discs (31, 32) and are guided towards one another and, between their two ends facing one another, form the ring-shaped exit gap (53) leading to the annular gap (24) and that the partial channels (43c, 44c) continue to extend into a free space formed between the projections (45, 46) and the central bores (51, 52) of the central distributor discs (31, 32), as far as the exit gap (53).

2. An extrusion head according to claim 1,
characterised in
that the passages (41, 42) are offset relative to the two partial channels (43, 44).

3. An extrusion head according to claim 2,
characterised in
that the passages (41, 42) are offset relative to one an other around the longitudinal axis (26) by 180° and that, in a plan view of the contact face, the supply channel (40) is designed as a semi-circular annular groove, with the connecting channel (39) being arranged centrally between the ends of said supply channel (40), at which the passages (41, 42) are positioned.

4. An extrusion head according to any one of claims 1 to 3,
characterised
that the supply channel (40) is worked into both abutting contact faces (35, 36) of the central distributor discs (31, 32) and that the one (31) of the central distributor discs (31, 32) comprises the passage (41) leading to the first outer distributor disc (29) and the further central distributor disc (32) comprises the passage (42) leading to the second outer distributor disc (30).

5. An extrusion head according to any one of claims 1 to 4,
characterised in
that the partial channels (43, 44) are each worked into both abutting contact faces (34, 33; 38, 37) of the central distributor discs (31, 32) and of the outer distributor discs (29, 30) and in each case form a closed ring.

6. An extrusion head according to claim 5,
characterised in
that the partial channel portion (43a, 44) arranged in the respective central distributor disc (31, 32) comprises a cross-sectional taper positioned diametrically relative to the passage (41, 42) and that the associated outer distributor disc (29, 30), in its partial channel portion (43b, 44b), is provided with a distributor web (54) corresponding to the passage (41, 42) of the central distributor disc (31, 32) and with a taper corresponding to the cross-sectional taper of the central distributor disc (31, 30).

7. An extrusion head according to any one of claims 1 to 6,
characterised in
that the central distributor discs (31, 32), across their contact faces (34, 38) intended to contact the associated contact faces (33, 37) of the outer distributor discs (29, 30), comprise axially projecting annular projections (47, 48) into which there extends a central bore (51, 52).

8. An extrusion head according to any one of claims 1 to 7,
characterised in
that the central bore (51, 52) of each of the central distributor discs (31, 32) comprises a cross-sectional taper towards its respective contact face (35, 36) by means of which it rests against the contact face (36, 35) of the other central distributor disc (31, 32).

9. An extrusion head according to any one of claims 1 to 8,
characterised in
that, by means of connecting means, the distributor discs (29 to 32) are removably connected to one another to form a unit.

10. An extrusion head according to claim 9,
characterised in
that the connecting means are formed by bolts (50).

11. An extrusion head according to any one of claims 1 to 10,
characterised by
a combination of a plurality of distributors (14 to 16; 17 to 19) in a housing (1, 2).

12. An extrusion head according to claim 11,
characterised in
that a plurality of housings (1, 2) is combined to form an assembly.

## Revendications

1. Tête d'extrusion pour la production d'ébauches en forme de tube ou de tuyau en matière plastique extrudable, qui sont constituées d'au moins une couche et sont destinées à la formation de corps creux, comprenant pour chaque couche un distributeur (14 à 19) qui possède un perçage central (28) et comporte une fente de sortie annulaire (53) vers une fente circulaire (24) formée entre la surface extérieure (27) d'une broche (23) et le perçage (28) du distributeur (14 à 19), ladite fente de sortie (53) communiquant avec un canal d'écoulement alimenté depuis un canal d'amenée (40), ce dernier présentant un canal de raccordement (39) pour la liaison avec une extrudeuse (3 à 7), et ladite broche (23) et le perçage du distributeur (14 à 19) présentant un axe longitudinal commun (26),
caractérisée en ce que
le distributeur (14 à 19) est constitué de quatre plaques de distributeur (29 à 32) appliquées les unes contre les autres par des surfaces de contact (33 à 38) qui représentent des plans sur lesquels l'axe longitudinal (26) est dressé perpendiculairement, le canal d'amenée (40) étant ménagé dans l'une au moins des surfaces de contact (35, 36) appliquées les unes contre les autres des deux plaques de distributeur médianes (31, 32), et ledit canal d'amenée étant pourvu de traversées (41, 42), en ce que le canal d'écoulement est subdivisé en deux canaux partiels (43, 44), parmi lesquels un canal partiel respectif est ménagé dans l'une au moins des surfaces de contact (34, 38) appliquées les unes contre les autres d'une plaque de distributeur médiane (31, 32), et celles (33, 37) d'une plaque de distributeur extérieure (29, 30), et les deux plaques de distributeur extérieures (29, 30) comportent des talons centraux (45, 46) qui dépassent dans les perçages centraux (51, 52) des deux plaques de distributeur médianes (31, 32) en étant guidés l'un en direction de l'autre, lesdits talons formant, entre leurs extrémités orientées l'une vers l'autre, la fente de sortie annulaire (53) vers la fente circulaire (24), et en ce que les canaux partiels (43c, 44c) se prolongent dans l'espace libre formé entre les talons (45, 46) et les perçages centraux (51, 52) des plaques de distributeur médianes (31, 32) jusqu'à la fente de sortie (53).

2. Tête d'extrusion selon la revendication 1, caractérisée en ce que les traversées (41, 42) vers les deux canaux partiels (43, 44) sont décalées l'une par rapport à l'autre.

3. Tête d'extrusion selon la revendication 2, caractérisée en ce que les traversées (41, 42) sont décalées l'une par rapport à l'autre de 180° autour de l'axe longitudinal (26), et le canal d'amenée (40) est conçu sous la forme d'une gorge annulaire en forme de demi-cercle, vue vers la surface de contact, et en ce que le canal de raccordement (39) est agencé au milieu entre les extrémités de ladite gorge au niveau desquelles se trouvent les traversées (41, 42).

4. Tête d'extrusion selon l'une des revendications 1 à 3, caractérisée en ce que le canal d'amenée (40) est ménagé dans les deux surfaces de contact (35, 36) appliquées l'une contre l'autre des plaques de distributeur médianes (31, 32), l'une (31) desdites plaques de distributeur médianes (31, 32) présentant la traversée (41) vers la première plaque de distributeur extérieure (29), et l'autre plaque de distributeur médiane (32) présentant la traversée (42) vers la deuxième plaque de distributeur extérieure (30).

5. Tête d'extrusion selon l'une des revendications 1 à 4, caractérisée en ce que les canaux partiels (43, 44) sont ménagés respectivement dans les deux surfaces de contact (34, 33 ; 38, 37) appliquées l'une contre l'autre des plaques de distributeur médianes (31, 32) et des plaques de distributeur extérieures (29, 30), et forment respectivement un anneau fermé.

6. Tête d'extrusion selon la revendication 5, caractérisée en ce que le tronçon de canal partiel (43a, 44a) ménagé dans la plaque de distributeur médiane respective (31, 32) présente, diamétralement par rapport à la traversée (41, 42), un rétrécissement de section, et la plaque de distributeur extérieure associée (29, 30) est pourvue dans son tronçon de canal partiel (43d, 43b) d'une barrette de distributeur (54) qui correspond à la traversée (41, 42) de la plaque de distributeur médiane (31, 32), et d'un rétrécissement qui correspond au rétrécissement de section de la plaque de distributeur médiane (31, 30).

7. Tête d'extrusion selon l'une des revendications 1 à 6, caractérisée en ce que les plaques de distributeur médianes (31, 32) présentent, au-delà de leurs surfaces de contact (34, 38) qui sont destinées à venir s'appliquer contre les surfaces de contact associées (33, 37) des plaques de distributeur extérieures (29, 30), des saillies annulaires (47, 48) en projection axiale, dans lesquelles s'étend un perçage central (51, 52).

8. Tête d'extrusion selon l'une des revendications 1 à 7, caractérisée en ce que le perçage central (51, 52) de chacune des plaques de distributeur médianes (31, 32) présente une section qui va en se rétrécissant respectivement vers sa surface de contact (35, 36) par laquelle elle s'applique contre la surface de contact (36, 35) de l'autre plaque de distributeur médiane (31, 32).

9. Tête d'extrusion selon l'une des revendications 1 à 8, caractérisée en ce que les plaques de distributeur (29 à 32) sont reliées les unes aux autres de manière détachable par des organes de liaison pour former une unité.

10. Tête d'extrusion selon la revendication 9, caractérisée en ce que les organes de liaison sont représentés par des vis (50).

11. Tête d'extrusion selon l'une des revendications 1 à 10, caractérisée par le regroupement de plusieurs distributeurs (14 à 16 ; 17 à 19) dans un boîtier (1, 2).

12. Tête d'extrusion selon la revendication 112, caractérisée en ce que plusieurs boîtiers (1, 2) sont regroupés pour former une unité structurelle.
